(19) Europäisches Patentamt
European Patent Office
Office européen des brevets

(11) Veröffentlichungsnummer: **0 334 284 B1**

(12) # EUROPÄISCHE PATENTSCHRIFT

(45) Veröffentlichungstag der Patentschrift: **27.07.94**

(51) Int. Cl.$^5$: **C08G 18/32**, C08G 18/38, C08G 18/80, C09D 5/44

(21) Anmeldenummer: **89105014.8**

(22) Anmeldetag: **21.03.89**

(54) **Härter für Kunstharze, diesen enthaltende härtbare Mischungen sowie dessen Verwendung.**

(30) Priorität: **23.03.88 DE 3809695**

(43) Veröffentlichungstag der Anmeldung:
**27.09.89 Patentblatt 89/39**

(45) Bekanntmachung des Hinweises auf die Patenterteilung:
**27.07.94 Patentblatt 94/30**

(84) Benannte Vertragsstaaten:
**AT BE CH DE ES FR GB GR IT LI LU NL SE**

(56) Entgegenhaltungen:
**EP-A- 0 083 232**
**EP-A- 0 135 909**
**EP-A- 0 193 103**
**WO-A-86/05196**
**US-A- 2 968 672**

(73) Patentinhaber: **HOECHST AKTIENGESELLSCHAFT**

**D-65926 Frankfurt(DE)**

(72) Erfinder: **Hönel, Michael, Dr.**
**Wallstrasse 24**
**D-6500 Mainz(DE)**
Erfinder: **Finke, Manfred, Dr.**
**Behringstrasse 25**
**D-6233 Kelkheim (Taunus)(DE)**
Erfinder: **Walz, Gerd, Dr.**
**Pfingstbornstrasse 99**
**D-6200 Wiesbaden(DE)**
Erfinder: **Ziegler, Peter, Dr.**
**Essenheimer Strasse 87**
**D-6500 Mainz(DE)**

**EP 0 334 284 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Härter auf Basis von Polyisocyanaten für den Einsatz in wäßrigen Lackzubereitungen, insbesondere Elektrotauchlacken, sind bekannt (vgl. u.a. DE-Offenlegungsschriften 35 18 732, 35 18 770 und 35 19 953 sowie EP-Offenlegungsschriften 138 193 und 192 118).

Diese Härter sind zwar relativ hydrolysestabil, jedoch in wäßrigen Systemen nicht ausreichend dispergierbar und führen zu Dispersionsinstabilitäten des Systems und zu Schwierigkeiten bei der elektr. Abscheidung, insbesondere bei höheren Konzentrationen, die zu einer ausreichenden Härtung in einer Reihe von Fällen erforderlich sind. Außerdem neigen solche Härter zu einer Versprödung des gehärteten Systems. DE-A- 0 083 232 beschreibt Härter in Form von Umsetzungsprodukten von halbverkappten Diisocyanaten mit tertiären Monoaminen, die mindestens zwei Hydroxyalkylgruppen enthalten.

Es wurde nun gefunden, daß sich diese Nachteile überraschenderweise dadurch weitgehend vermeiden lassen, daß als Härter Umsetzungsprodukte von bestimmten OH-Gruppen enthaltenden Polyaminen und teilverkappten Polyisocyanaten eingesetzt werden.

Die Erfindung betrifft demgemäß einen Härter (A) für mit Isocyanaten härtbare Harze (B), der eine Aminzahl von 20 bis 150 mg KOH/g und eine OH-Zahl von höchstens 20 mg KOH/g besitzt und mindestens zwei verkappte, unter den Härtungsbedingungen reaktive Isocyanatgruppen pro Molekül aufweist, erhalten durch Umsatz

(a) eines Reaktionsproduktes aus

(1) einem Amin der Formel

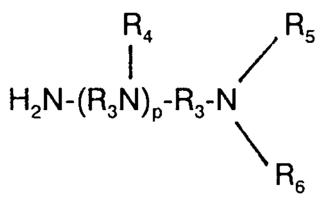

in der

- p Null oder eine ganze Zahl von 1 bis 6 ist,
- $R_3$ einen zweiwertigen nichtaromatischen Kohlenwasserstoffrest mit 2 bis 18 C-Atomen oder einen Cycloalkylenrest mit 5 bis 12 C-Atomen, oder einen Aralkylenrest mit 7 bis 12 C-Atomen darstellt und
- $R_4$ für H oder

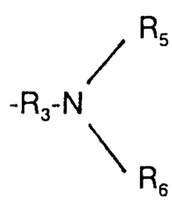

steht, worin $R_3$ die gleiche Bedeutung wie vorstehend hat, und

$R_5$, $R_6$ entweder unabhängig voneinander für H, $(C_1\text{-}C_{20})$Alkyl, Hydroxy$(C_1\text{-}C_{16})$Alkyl oder

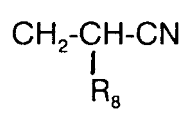

($R_8$ = H oder $(C_1\text{-}C_6)$Alkyl) stehen oder

$R_5$ und $R_6$ Teil eines 5-, 6- oder 7-gliedrigen aliphatischen Ringes sind, mit

(2) einem Monoepoxid, wobei dieses Reaktionsprodukt eine OH-Zahl von 100 bis 1200 mg KOH/g und eine Aminzahl von 100 bis 1200 mg KOH/g aufweist und gegebenenfalls auch NHCO-Gruppen enthält, mit

(b) einem teilverkappten Polyisocyanat, gegebenfalls in Abmischung mit

(c) einer mindestens difunktionellen, OH- und/oder NH-reaktiven Verbindung.

Weiterhin bezieht sich die Erfindung auf ein Verfahren zur Herstellung eines Härters (A), auf härtbare Mischungen, welche diesen Härter (A) enthalten, sowie die Verwendung dieses Härters (A) in härtbaren Mischungen, insbesondere in Elektrotauchlacken.

Der Härter (A) gemäß der Erfindung besitzt eine Aminzahl von 20 bis 150 mg KOH/g, vorzugsweise von 50 bis 100 mg KOH/g (Gesamtaminzahl, d.h. primäre, sekundäre und tertiäre Aminogruppen). Der Anteil an tertiären Aminogruppen beträgt daran im allgemeinen 50 bis 100 %, vorzugsweise 75 bis 100 % und insbesondere 100 %. Die OH-Zahl des Härters liegt zumeist unterhalb von 20 mg KOH/g, vorzugsweise unterhalb von 10 mg KOH/g und insbesondere unterhalb von 1 mg KOH/g bis praktisch gleich Null. Weiterhin enthält der erfindungsgemäße Härter im statistischen Mittel mindestens 2, vorzugsweise 2 bis 10 und insbesondere 4 bis 8 verkappte, unter den Härtungsbedingungen reaktive Isocyanatgruppen pro Molekül sowie vorzugsweise mindestens 2, vorzugsweise 2 bis 8 und insbesondere 2 bis 6 tertiäre Aminogruppen pro Molekül. Sein Molekulargewicht (Zahlenmittel $M_n$, bestimmt mittels Gelchromatographie; Polystyrolstandard) liegt zumeist zwischen 500 und 20000, vorzugsweise 1500 und 6000, besonders bevorzugt 1500 und 4000.

Die Herstellung des erfindungsgemäßen Härters erfolgt durch Umsatz eines mindestens eine $\beta$-Hydroxyalkylgruppe pro Molekül enthaltenden Reaktionsprodukts (a) (nachfolgend "(Poly)amin") mit einem teilverkappten Isocyanat (b).

Das (Poly)amin (a) besitzt in der Regel eine OH-Zahl von 100 bis 1200, vorzugsweise von 200 bis 1000 mg KOH/g und eine Aminzahl (Gesamt) von 100 bis 1200, vorzugsweise 300 bis 700 mg KOH/g. Die Aminzhal nur für die tertiären Aminogruppen (bestimmt nach DIN 53176/DIN 16945/I/5.6; Maskierung der primären/sekundären Aminogruppen) liegt zumeist zwischen 0 und 800, vorzugsweise zwischen 200 und 600 mg KOH/g. Der Alkoxylierungsgrad $\frac{m}{n} \cdot 100(\%)$, wobei m die Mole Alkylenoxid und n die Zahl der alkylenoxidreaktiven NH-Funktionen pro Mol (Poly)amin (= (Mole Alkylenoxid/Mol (Poly)amin) x 100) bedeutet, beträgt zweckmäßigerweise 15 bis 100 %, vorzugsweise 50 bis 90 %. Gegebenenfalls enthält dieses (Poly)amin (a) auch NHCO-Gruppen, insbesondere NHCO-NH-Gruppen, deren Zahl im allgemeinen 0 bis 5, insbesondere 2 oder 3 beträgt, und die von der weiter unten beschriebenen Umsetzung mit Polyisocyanaten zwecks Molekül-(Funktionalitäts)erhöhung herrühren.

Nach einer weiteren vorteilhaften Ausführungsform besitzen diese (Poly)amine (a) im statistischen Mittel noch mindestens eine NH-Funktion, vorzugsweise eine oder zwei NH-Funktionen. Bei der nachfolgenden Umsetzung mit Polyisocyanaten (teilverkappt oder unverkappt) entstehen daraus dann Harnstoffgruppen (daneben durch Reaktion mit den OH-Gruppen auch Urethangruppen), die zu sehr guten Zwischenschichthaftungen führen.

Geeignete (Poly)amine (a) sind beispielsweise in den US-PSen 3 152 188, 3 200 155, 4 465 858 und 4 548 707 sowie in der DE-Offenlegungsschrift 2 522 219 beschrieben. Es können auch Gemische verschiedener (Poly)amine (a) eingesetzt werden.

Die Herstellung dieser (Poly)amine (a) erfolgt in bekannter Weise durch Umsatz der Amine (1) mit geeigneten Monoepoxiden bis zum gewünschten Alkoxylierungsgrad bei Temperaturen von zweckmäßigerweise 40 bis 200 °C, vorzugsweise 60 bis 150 °C und gegebenenfalls erhöhtem Druck, beispielsweise bis zu 10 bar. Im allgemeinen genügt bei dieser Umsetzung die basische Autokatalyse der eingesetzten Amine. Ggf. können jedoch auch basische Katalysatoren, wie z.B. Triethylamin, (Erd-) Alkalialkoholate, Diazabicyclooctan, N,N-Dimethylaminopyrridin, zugesetzt werden in Mengen von zweckmäßigerweise 0,01 bis 2 Gew.-%.

Die zur Umsetzung mit den Monoepoxiden verwendeten Amine (1) enthalten mindestens zwei, vorzugsweise bis 10 Aminogruppen pro Molekül, wovon vorzugsweise mindestens zwei primär oder eine primär und/oder eine sekundär und/oder eine tertiär ist. Die Kohlenstoff-Zahl dieser Amine beträgt im allgemeinen 2 bis 40, vorzugsweise 2 bis 20. Ein Teil dieser primären Aminogruppen kann blockiert sein, beispielsweise mit Ketonen als Ketimingruppen. Weiterhin können diese Amine auch OH-Gruppen enthalten.

Die Amine (1) haben die Formel

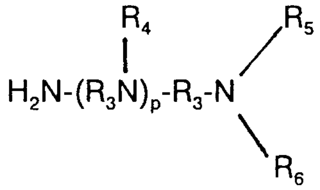

in der

p Null oder eine ganze Zahl von 1 bis 6, vorzugsweise 1 bis 4 ist,

$R_3$ einen zweiwertigen, vorzugsweise nichtaromatischen Kohlenwasserstoffrest mit 2 bis 18 C-Atomen, vorzugsweise einen verzweigten oder unverzweigten Alkylenrest mit 2 bis 10 C-Atomen, insbesondere mit 2 bis 6 C-Atomen, oder einen Cycloalkylenrest mit 5 bis 12 C-Atomen, vorzugsweise 6 bis 10 C-Atomen, oder einen Aralkylenrest mit 7 bis 12 C-Atomen, vorzugweise 8 bis 10 C-Atomen, darstellt und

$R_4$ für H oder

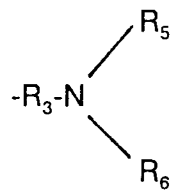

steht, worin $R_3$ die gleiche Bedeutung wie vorstehend hat, und

$R_5$, $R_6$ entweder unabhängig voneinander für H, $(C_1\text{-}C_{20})$Alkyl, vorzugsweise $(C_1\text{-}C_6)$Alkyl, Hydroxy$(C_1\text{-}C_{16})$Alkyl,

vorzugsweise

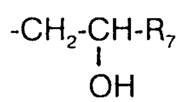

($R_7$ = H, $(C_1\text{-}C_{12})$Alkyl, $-CH_2\text{-}O\text{-}(C_1\text{-}C_{12})$Alkyl,
$-CH_2\text{-}O\text{-}$Aryl,

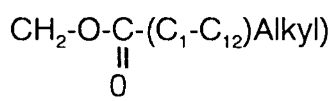 oder 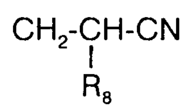

($R_8$ = H oder $(C_1\text{-}C_6)$Alkyl) stehen oder

$R_5$ und $R_6$ Teil eines 5-, 6- oder 7-gliedrigen aliphatischen Ringes sind, mit der Maßgabe, daß bei p gleich Null $R_4$ nicht gleich H ist.

Beispiele für geeignete Polyamine sind: Ethylendiamin, Propylendiamin, 2-Methyl-pentamethylendiamin, Hexamethylendiamin, Trimethylhexamethylendiamin, Neopentyldiamin, Octamethylendiamin, Triacetondiamin, Dioxadecandiamin, Dioxadodecandiamin und höhere Homologe, cycloaliphatische Diamine wie 1,2-, 1,3- oder 1,4-Cyclohexandiamin; 4,4'-Methylen-bis-cyclohexylamin, 4,4-Isopropylen-bis-cyclohexylamin, Isophorondiamin, Tricyclododecenyldiamin, Menthandiamin, 4,4'-Diamino-3,3'-dimethyl-di-cyclohexylmethan, 3-Aminomethyl-1-(3-amino-propyl-1-methyl)-4-methylcyclohexan, N-Methylethylendiamin, N-Aminoethylpiperazin, 2-Aminoethylpiperazin, N,N-Dimethylethylendiamin, -propylendiamin, N,N-Dimethylaminopropylamin, N,N-Dihydroxyethylethylendiamin, aromatische Amine wie m-Xylylendiamin, aliphatische Poly(Tri-,Tetra-)amine wie Diethylentriamin, Dipropylentriamin, Triethylentetramin, Tetraethylenpentamin, Pentaethylenhexamin, Methyliminobispropylamin, Bis(hexamethylen)triamin, N-Alkylaminodipropylentriamine (Alkyl = $CH_3$-, $C_4H_5$-, $(CH_3)_2N\text{-}(CH_2)_3$-), Tetrapropylenpentamin; ferner Alkanolamine wie Aminoethylethanolamin, N-(2-hydroxypropyl)ethylendiamin, Ethylenglycol-bis-propylamin, Hydroxyethylaminoethylamin, Hydroxyethyldiethylentriamin und ähnliche.

Als Monoepoxide (2) kommen beispielsweise Verbindungen der Formel (VI)

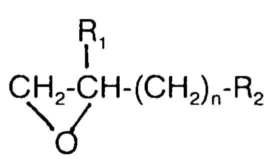 (VI)

in Frage, in der $R_1$, $R_2$ und n die folgenden Bedeutungen haben:

$R_1$ = H oder $(C_1\text{-}C_6)$Alkyl (verzweigt oder unverzweigt);

$R_2$ = H,

= Kohlenwasserstoffrest, vorzugsweise (Cyclo)Alkylrest, der verzweigt oder unverzweigt oder unverzweigt sein und Substituenten wie OH-Gruppen tragen kann, mit 1 bis 12, vorzugsweise 1 bis 6 C-Atomen, wie Methyl, Ethyl, Propyl, Hexyl,

= $(C_1\text{-}C_{10})$-Alkoxy (verzweigt oder unverzweigt),

vorzugsweise $(C_2\text{-}C_8)$-Alkoxy, wie Ethyloxy, Propyloxy, Butyloxy, 2-Ethylhexyloxy; (vorzugsweise bei n = 1),

= $(C_1\text{-}C_{15})$-Acyloxy (verzweigt oder unverzweigt),

vorzugsweise $(C_4\text{-}C_{12})$-Acyloxy; (vorzugsweise bei n = 1);

n = 0 oder 1.

Beispiele für derartige Monoepoxide, die auch in Mischung untereinander verwendet werden können, sind: epoxidierte, einfach-ungesättigte Kohlenwasserstoffe (Alkylenoxide), wie Ethylenoxid, Propylenoxid, Hexen-, Octen- und Dodecen-1-oxid, Styroloxid; Glycidol; Glycidylether von (cyclo)aliphatischen, ein- oder mehrwertigen Alkoholen oder einwertigen Phenolen wie Ethylglycidylether, Propylglycidylether, Hydroxyethylglycidylether, Hexylglycidylether, 2-Ethylhexylglycidylether und Glycidylether von Fettalkoholen; weiterhin Glycidylester von gesättigten oder ungesättigten Carbonsäuren, vorzugsweise Monocarbonsäuren, wie der Glycidylester von Meth(acryl)säure, Adipinsäure, Tetra- und Hexahydrophthalsäure, Versaticsäure und Fettsäuren. Bezüglich weiterer geeigneter Monoepoxidverbindungen sei auf "Langkettige $\alpha$-Epoxide"-A 0.1.4 Broschüre der Fa. Interox (Cheshire, GB) und den darin enthaltenden Lit.-Zitaten verwiesen.

Zur Erhöhung der Funktionalität kann das Umsetzungsprodukt von (Poly)amin und Monoepoxidverbindung nach einer Ausführungsfrom der Erfindung mit einer OH- und/oder NH-reaktiven, mindestens difunktionellen Verbindung umgesetzt werden. Dies kann in einer eigenen Reaktion vor oder nach der Umsetzung mit dem teilverkappten Polyisocyanat (b) geschehen. Bevorzugt erfolgen beide Reaktionen jedoch in einer Eintopfreaktion. Falls das Umsetzungsprodukt aus (Poly)amin und Monepoxidverbindung noch freie NH-Funktionen enthält, erfolgt in erster Linie mit diesen die Reaktion mit der difunktionellen Verbindung. Ansonsten und im Falle der Eintopfreaktion tritt die Molekülvergrößerung (überwiegend) durch Reaktion mit den OH-Gruppen ein. Das so erhaltene Produkt soll hier auch von dem Begriff "Amin" des Merkmals (a) von Anspruch 1 umfaßt werden.

Als di- bzw. polyfunktionelle Verbindungen kommen beispielsweise Diisocyanate der weiter unten beschriebenen Art oder Diepoxide analog der obigen Formel (VI) (hier jedoch 2 Epoxidgruppen) in Frage, wobei bei letzteren das Epoxidäquivalentgewicht vorzugsweise zwischen 100 und 1000 liegt. Geeignete Diepoxide sind beispielsweise in Wagner, Sarx: "Lackkunstharze", S. 174-194 (1971), Carl Hanser Verlag, München) sowie in der EP-OS 107.098 beschrieben, auf die hier Bezug genommen wird.

Das (Poly)amin (a), wird dann gegebenenfalls während (Eintopfreaktion) oder nach der vorstehend erwähnten Molekülvergrößerung zwecks Funktionalitätserhöhung, mit dem teilverkappten Polyisocyanat (b) umgesetzt. Dem (Poly)amin (a) können dabei auch bis zu 55 Gew.-%, vorzugsweise bis zu 40 Gew.-% und insbesondere bis zu 20 Gew.-% beliebige andere NH- und/oder OH-funktionelle Verbindungen zugemischt werden, sofern diese die Härterfunktion nicht nachteilig beeinflussen. Beispiele für derartige Verbindungen sind: Polyethylenglykole, Polypropylenglykole (beide biespielsweise mit einem mittleren Molekulargewicht von 200-600), Polycaprolactondi- bzw. -triole (z.B. Capa 200, 205, 305 der Fa. Interox, Cheshire, GB), Trimethylolpropan, aliphatische Diole wie z.B. Butandiol 1,4, Hexandiol 1,6, Neopentylglykol und ähnliche. Weitere hierfür geeignete Verbindungen enthalten vorzugsweise zusätzlich basische, nicht isocyanatreaktive Gruppierungen. Beispiele hierfür sind: N-Alkyldipropylentriamine (Alkyl = $CH_3$, $C_4H_9$, $(CH_3)_2\text{-N-}(CH_2)_3$), N,N-Dimethyl- (oder diethyl-)-aminopropylenamin udgl. So kann man beispielsweise ein oder mehrere (Poly)amine (a), vorzugsweise solche, die noch mindestens eine freie NH-Funktion besitzen (ggf. auch Gemische mit einer und zwei NH-Funktionen) mit der difunktionellen, OH- und/oder NH-reaktiven Verbindung (Diisocyanat oder ein Diepoxid) und der difunktionellen, NH-/OH-funktionellen Verbindung (Diol, Diamin, Aminoalkohol) umsetzen und das so erhaltene Umsetzungsprodukt mit dem halbverkappten Polyisocyanat (b) zur Reaktion bringen. Auch diese Reaktion kann als Eintopfreaktion erfolgen.

Als Polyisocyanate können beliebige auf dem Polyurethan- bzw. Lackgebiet bekannte Polyisocyanate eingesetzt werden, beispielsweise aliphatische, cycloaliphatische oder aromatische Polyisocyanate. Typische Biespiele für die verwendeten Polyisocyanate sind 2,4- oder 2,6-Toluylendiisocyanat, Xylylendiisocyanat, Diphenylmethan-4,4′-diisocyanat, Triphenylmethyl-4,4′-triisocyanat, Triphenylmethantriisocyanat, Polyphenyl-polymethyl-isocyanat, Hexamethylendiisocyanat sowie Tri- und Tetramethylhexamethylendiisocyanat, 2,2,4(2,4,4)-Methylcyclohexyldiisocyanat, Isophorondiisocyanat, Dicyclohexylmethyldiisocyanat, Diethylfumarhexylisocyanat, Bis-(3-Methyl-4-isocyanatocyclohexyl)-methan, 2,2-Bis-(4-isocyanatcyclohexyl)-propan,

den Methylester des Lysindiisocyanats, das Biuret des Hexamethylendiisocyanats, Diisocyanate dimerer Säuren, 1-Methyl-benzol-2,4,5-triisocyanat, Biphenyl-2,4,4′-triisocyanat, das Triisocyanat aus 3 Mol Hexamethylendiisocyanat und 1 Mol Wasser mit 16 % NCO-Gehalt.

Neben diesen einfachen Polyisocyanaten sind auch solche geeignet, die Heteroatome in dem die Isocyanatgruppen verknüpfenden Rest enthalten. Beispiele hierfür sind Polyisocyanate, die Carbodimidgruppen, Allophonatgruppen, Isocyanuratgruppen, Urethangruppen, acylierte Harnstoffgruppen oder Biuretgruppen aufweisen.

Geeignete Polyisocyanate sind schließlich auch die bekannten, endständige Isocyanatgruppen aufweisenden Präpolymere, wie sie insbesondere durch Umsetzung der obengenannten einfachen Polyisocyanate, vor allem Diisocyanate mit überschüssigen Mengen an organischen Verbindungen mit mindestens zwei gegenüber Isocyanatgruppen reaktionsfähigen Gruppen zugänglich sind. Weitere geeignete Polyisocyanate sind beispielsweise in DE-A 36 44 372 beschrieben. Es können auch Gemische der verschiedenen Polyisocyanate verwendet werden.

Als Verkappungsmittel eignen sich aliphatische, cycloaliphatische oder alkylaromatische (einwertige) Alkohole, z.B. niedere aliphatische Alkohole wie Methyl-, Äthylalkohol, die verschiedenen Propyl-, Butyl- und Hexylalkohole, Heptyl-, Octyl-, Nonyl-, Decylalkohol und ähnliche; ferner ungesättigte Alkohole wie Propargyl- und Allylalkohole, cycloaliphatische Alkohole wie Cyclopentanol, Cyclohexanol, alkylaromatische Alkohole wie Benzylalkohol, Methyl- sowie p-Methoxy- und p-Nitrobenzylalkohol, α-Hydroxyalkylpyridine, Furfurylalkohol und Monoäther von Glykolen wie Ethylen-glykolmonoethyläther, -monobutyläther, Methoxypropanol, 3-Methyl-3-Methoxybutanol und ähnliche. Weitere Verkappungsmittel sind Ketoxime, zweckmäßigerweise mit 3 bis 20 C-Atomen, vorzugsweise 3 bis 10 C-Atomen, wie Acetonoxim, Methylethylketonoxim ( = Butanonoxim), Hexanonoxim (wie Methyl-Butylketonoxim), Heptanonoxim (wie Methyl-n-Amylketonoxim), Octanonoxim und cyclohexanonoxim; weiterhin CH-acide Verbindungen wie Malonsäurealkylester, Acetessigester sowie Cyanessigester mit jeweils 1 bis 4 C-Atomen in der Estergruppe, NH-acide Verbindungen wie Caprolactam, Aminoalkohole, wie Dimethylethanolamin oder Diethylethanolamin. Diese Aminoalkohole können beispielsweise auch in Gemisch mit den anderen angegebenen Verkappungsmitteln benutzt werden, etwa in Mengen von bis zu 25 Mol-%, insbesondere 6-12 Mol-%, bezogen auf die Mischung. Das als Blockierungsmittel bekannte Phenol kann insbesondere, in solchen Fällen eingesetzt werden, bei denen das Umsetzungsprodukt zur Herstellung von nichtwäßrigen Lacken verwendet wird.

Die Umsetzung von Amin (a) mit dem teilverkappten Polyisocyanat (b) sowie gegebenenfalls einer Polyfunktionellen Verbindung, insbesondere einen unverkappten Diisocyanat, erfolgt unter Bedingungen, die eine Gelierung des Reaktionsansatzes weitgehend ausschließen. Dies läßt sich beispielsweise durch die Wahl der Mengenverhältnisse erreichen. Vorzugsweise enthält der Härter (A) weniger als 5 Gew.-%, insbesondere weniger als 1 Gew.-% an vernetzten und/oder höhermolekularen ($\overline{M}_n$ > 10000) Anteilen.

Die Menge an teilverkapptem Polyisocyanat ist auch so zu wählen, daß eine ausreichende Zahl an vernetzungsaktiven, verkappten Isocyanatgruppen, vorzugsweise 4 bis 10, in das Amin (a) eingebracht werden. Zweckmäßigerweise bezieht man sich dabei auf den Prozentgehalt des zur Verkappung verwendeten Isocyanates pro Molekül. Für Toluylendiisocyanat (TDI) liegt dieser Bereich zwischen 30-50 %, bevorzugt zwischen 38-47 %. Der Reaktionsverlauf wird durch die bekannte Titration (ISO-DP ABCD bzw. DIN 53185) des % NCO-Gehaltes verfolgt. Die Reaktion wird nach Erreichen eines % NCO-Gehaltes von < 0,2 abgebrochen.

Im allgemeinen ist für die Reaktion zwischen Polyamin (a) und dem (den) Polyisocyanat(en) die Anwesenheit eines Lösungsmittels von Vorteil. Hierfür eignen sich inerte, vorzugsweise aprotische Lösungsmittel, die bei Einsatz in wäßrigen Lackzubereitungen möglichst leicht aus dem System wieder entfernbar sein sollen. Genannt seien hier beispielsweise: halogenierte Kohlenwasserstoffe (weniger geeignet bei Einsatz als Tauchlack), Ether wie Diethylether, 1,2-Dimethoxyethan, Tetrahydrofuran oder Dioxan; Ketone, wie beispielsweise Aceton, Methylethylketon, Methylisobutylketon, Cyclohexanon und ähnliche; Ester (weniger geeignet bei Einsatz als Tauchlack), wie Butylacetat, Ethylglykolacetat, Methoxypropylacetat; N-Methylpyrrolidon; (cyclo)aliphatische und/oder aromatische Kohlenwasserstoffe, wie Hexan, Heptan, Cyclohexan, Benzol, Toluol, die verschiedenen Xylole sowie weniger bevorzugt aromatische Lösemittel im Siedebereich von ca. 150 bis 180 °C (höhersiedende Mineralölfraktionen, wie ®Solvesso). Die Lösemittel können dabei einzeln oder im Gemisch eingesetzt werden.

Die Temperatur der Reaktion liegt im allgemeinen zwischen 30 °-80 °C und wird durch gelegentliches Kühlen bzw. Heizen eingestellt. (Die Temperatur kann ggf. die Reihenfolge der Umsetzung mit NCO (NH vor OH) bei Eintropfverfahren beeinflussen).

Die erfindungsgemäßen Härter sind in wäßrigem System, ggf. nach vorheriger Neutralisation mit Säure, dispergierbar und können der wäßrigen Lackzubereitung, z.B. einem Elektrotauchlack, in beträchtlichen Mengen zugegeben werden, ohne die Stabilität des Systems nachteilig zu beeinflussen. In vielen Fällen

wirken diese Härter ganz im Gegenteil sogar stabilitätsverbessernd.

Die Erfindung betrifft weiterhin härtbare Mischungen auf Basis der Härtungskomponente (A), eines mit Isocyanaten härtbares Bindemittels (B), das isocyanatreaktive Gruppen enthält, gegebenenfalls einem Verdünnungsmittel (C), sowie gegebenenfalls Zusatzstoffen (D). Damit lassen sich Überzüge mit sehr guten Eigenschaften herstellen. Derartige Überzüge können nach den üblichen Methoden, wie Streichen, Spritzen, Tauchen, Gießen, Rakeln oder vorzugsweise durch kathodische Abscheidung auf den verschiedensten Substraten, wie vorzugsweise Metall aufgebracht werden.

Das Molekulargewicht ( Zahlenmittel $\overline{M}_n$) des Bindemittels (B), bestimmt mittels Gelchromatographie (Polystyrolstandard), liegt üblicherweise im Bereich von etwa 300 bis 50000, vorzugsweise etwa 1000 bis 20000. Vorzugsweise besitzen diese Bindemittel (B) also harzartigen Charakter. In Sonderfällen kann das Molekulargewicht 100000 oder mehr betragen. Als Polymere kommen dabei Polymerisate, Polykondensate oder Polyadditionsverbindungen in Betracht, die mit Isocyanatgruppen reaktive Gruppen enthalten, wie Hydroxyl-und/oder Amino-Gruppen, wobei von diesen im Mittel zumindest zwei pro Molekül vorhanden sind.

Die Funktionalität (NH, $NH_2$, OH) dieser Polymeren kann gemäß der Summe aus Aminzahl (nur auf NH, $NH_2$ bezogen) und Hydroxylzahl beispielsweise zwischen 20-1500, bevorzugt zwischen 100-1000 und besonders bevorzugt zwischen 100-500 liegen.

Beispiele für OH-gruppenhaltige Kunstharze (Polyole) sind Polyetherpolyole, Polyacetalpolyole, Polyesteramidpolyole, Epoxidharzpolyole oder deren Umsetzungsprodukte mit $CO_2$, Phenolharzpolyole, Polyharnstoffpolyole, Polyurethanpolyole, teilweise verseifte Homo- und Copolymerisate von Vinylestern, teilweise acetalisierte Polyvinylalkohole, Polyesterpolyole oder Acrylatharzpolyole. Weiterhin kommen hier OH-haltige Phenol-, Harnstoff- oder Melaminharze in Frage. Derartige Polyole, die auch in Mischung eingesetzt werden können, sind beispielsweise in der DE-Offenlegungsschrift 31 24 784 sowie in den EP-Offenlegungsschriften 123 880 und 189 728 beschrieben.

Bevorzugt sind Epoxidharzpolyole, Polyesterpolyole, Polyurethanpolyole, Polyetherpolyole und Acrylatharzpolyole.

Kunstharze (B), die Hydroxyl- und Aminogruppen enthalten, sind beispielsweise im Journal of Coatings Technology, Vol. 54, No. 686, (1982), S. 33 bis 41 ("Polymer Compositions for Cationic Electodepositable Coatings") beschrieben, auf das Bezug genommen wird. Erwähnt seien hier Polymerisate aus $\alpha,\beta$-olefinisch ungesättigten Monomeren, die Hydroxy-und/oder Aminogruppen enthalten. Die Einführung der Hydroxy- und/oder Aminogruppen kann durch Verwendung entsprechender Monomere bei der Copolymerisation, z.B. durch Hydroxy- oder Aminoester von $\alpha,\beta$-olefinisch ungesättigten Carbonsäuren, wie Hydroxyalkyl(meth)-acrylate oder Aminoalkyl(meth)acrylate, erfolgen oder durch polymeranaloge Umsetzung mit Di- oder Polyaminen, z.B. mit N,N-Dimethyl-aminopropylamin, unter Ausbildung von Amid-, Amino- oder Urethangruppen. Eine weitere Gruppe sind die aus dimerisierten Fettsäuren und Polyaminen erhältlichen Polyaminopolyamide oder die beispielsweise durch Umsetzung von Epoxydharzen mit primären oder sekundären Aminen zugänglichen Aminopolyetherpolyole, die sich besonders eignen. Diese sind beispielsweise durch Umsetzung von primären oder sekundären Aminen mit einem Polyglycidylether zugänglich. Dabei sollen so viele Epoxidgruppen vorhanden sein, daß alle nicht maskierten Aminogruppen in tertiäre Aminogruppen umgewandelt werden. Die bevorzugten Polyglycidylether sind Polyglycidylether von Bisphenol A und ähnlichen Polyphenolen. Man kann sie beispielsweise herstellen, indem man ein Polyphenol mit einem Epohalogenhydrin, wie Epichlorhydrin in Gegenwart von Alkali verethert.

Statt der Polyglycidylether lassen sich auch deren Umsetzungsprodukte mit $CO_2$ einsetzen. Diese Produkte enthalten cyclische Carbonatgruppen, die mit primären Aminen unter Ausbildung von Urethanen eingesetzt werden können. Je nach den Molverhältnissen von Polyglycidylether und $CO_2$ erhält man bei der Reaktion mit $CO_2$ Verbindungen, die keine Epoxidgruppen mehr enthalten, oder Verbindungen, die Epoxidgruppen und cyclische Carbonatgruppen aufweisen. Derartige cyclische Carbonatgruppen lassen sich auch über entsprechende Monomere, welche diese Gruppen enthalten, in die Polymerenkette einführen; siehe hierzu die DE-A 36 44 372 und 36 44 373. Die Umsetzung derartiger cyclischer Carbonatgruppen enthaltender Polymere mit Aminen unter Bildung von sogenannten Aminourethanen ist beispielsweise in EP-A 234 395 sowie in DE-A 36 44 370 beschrieben.

Die Polyglycidylether der Polyphenole oder deren Umsetzungsprodukte mit $CO_2$ können als solche mit den Aminen zur Reaktion gebracht werden, jedoch ist es häufig vorteilhaft, einen Teil der reaktionsfähigen Epoxidgruppen mit einem modifizierenden Material umzusetzen, um die Filmeigenschaften zu verbessern. Besonders bevorzugt ist die Umsetzung der Epoxidgruppen mit einem Polyol oder einer Polycarbonsäure. Diese Modifizierung erfolgt bevorzugt vor der Umsetzung der Polyglycidylether oder deren Umsetzungsprodukte mit $CO_2$ mit den primären oder sekundären Aminen. Es ist jedoch auch möglich, das Verhältnis des als Ausgangsmaterial verwendeten Polyglycidylethers zu den Aminen so zu wählen, daß ein Überschuß an Epoxygruppen vorhanden ist. Die Epoxygruppen können dann mit den Polycarbonsäuren oder Polyolen

umgesetzt werden. Weiterhin ist es möglich, das Endprodukt, das keine Epoxidgruppen mehr enthält, durch Reaktion der Hydroxylgruppen mit Glycidylethern weiter zu modifizieren.

Bei der Verwendung in Elektrotauchlacken ist die Anzahl an basischen Gruppen in dem Bindemittel (B) so zu wählen, daß eine ausreichende Wasserverdünnbarkeit im sauren Milieu gewährleistet ist.

Das Verhältnis von Härter (A) und Bindemittel (B) richtet sich nach der gewünschten Vernetzungsdichte und hängt von der Funktionalität der (des) Härter(s) (d.h. der Gesamtmenge an vernetzungsaktiven, verkappten Isocyanatgruppen, die anteilsweise auch durch das Bindemittel eingebracht werden können) und der Funktionalität des Bindemittels (Anzahl der Hydroxyl- und/oder Aminogruppen) ab. Im allgemeinen liegt die Menge an (A) bei 5 bis 85, vorzugsweise bei 25 bis 48 Gew.-%, bezogen auf (A) + (B).

Als Verdünnungsmittel (C) kommen die üblichen Lacklösemittel, z.B. die weiter oben beschriebenen, in Frage. Vorzugsweise wird hierfür jedoch Wasser, gegebenenfalls im Gemisch mit derartigen organischen Lösungsmitteln, eingesetzt. Für derartige wäßrige Systeme, die bevorzugt als Elektrotauchlacke verwendet werden, ist es vorteilhaft, die basischen Aminogruppen teilweise oder vollständig zu neutralisieren, um damit Lackzubereitungen zu erhalten, die aus wäßriger Lösung bei einem Bad-pH zwischen etwa 3 und 9 elektrisch abgeschieden werden können. Die Neutralisation der basischen Gruppen wird im allgemeinen mit wasserlöslichen Säuren, beispielsweise Ameisensäure, Essigsäure, Milchsäure oder Phosphorsäure oder entsprechenden Mischungen vorgenommen. Die Säuremenge hängt im Einzelfall von den Eigenschaften des verwendeten Harzes ab und wird im allgemeinen nur so weit durchgeführt, daß das Harz solubilisiert oder in eine stabile, wäßrige Emulsion (bzw. Dispersion) übergeführt wird. Im allgemeinen werden dafür Neutralisationsgrade (NG) von 20 bis 70 % benötigt. Die in den Beispielen angeführten meQ-Werte (mmol Säure/100 g Festsubstanz) stehen dazu in folgender Beziehung (AZ = Aminzahl):

$$meQ = \frac{NG \cdot AZ}{5,61}$$

Die Feststoffgehalte des Elektrotauchlackes liegen im allgemeinen bei 10 bis 30 Gew.-%.

Wäßrige Zubereitungen, die einen besonders niedrigen Gehalt an flüchtigen organischen Lösungsmitteln besitzen, z.B. 0,5 bis 5 Gew.-%, bezogen auf Gesamtfestkörper (bestimmt bei 125 °C/60 min) erhält man - wie beispielsweise in DE-A 36 02 980 beschrieben - durch Abdestillation der in den Bindemitteln von der Herstellung oder Lösung her enthaltenen Lösungsmittel. Bevorzugt wird dieser Verfahrensschritt am teilneutralisierten Harz unter vermindertem Druck durchgeführt.

Als übliche Zusatzstoffe im Sinne von (D), die eventuell in der erfindungsgemäßen härtbaren Mischung vorhanden sein können, seien hier - in Abhängigkeit von dem jeweiligen Verwendungszweck - die üblichen Lackadditive wie Pigmente (Eisenoxide, Bleioxide, Bleisilikate, Titandioxid, Bariumsulfat, Zinkoxid, Zinksulfid, Phthalocyaninkomplexe etc.), Pigmentpasten, Antioxidatien, (UV-)Stabilisatoren, Verlauf- bzw. Verdikkungsmittel, Entschäumer und/oder Netzmittel, Reaktivverdünner, Füllstoffe (Talkum, Glimmer, Kaolin, Kreide, Quarzmehl, Asbestmehl, Schiefermehl, verschiedene Kieselsäuren, Silikate etc.), zusätzliche Härter (wie beispielsweise in DE-A 37 26 497 beschrieben) und zusätzliche härtbare Verbindungen, Katalysatoren udgl. genannt. Diese Additive können der Mischung gegebenenfalls erst unmittelbar vor der Verarbeitung zugegeben werden.

Als Katalysatoren zur Beschleunigung der Härtung eignen sich beispielsweise Salze oder Komplexe von Metallen, wie beispielsweise Blei, Zink, Eisen, Zinn, Mangan und Wismut. Bevorzugte Metallkatalysatoren sind dabei Bleiverbindungen, wie Bleicarboxylate mit 1 bis 10 C-Atomen, beispielsweise Bleiformiat, Bleiacetat, Bleipropionat, Bleilactat, Bleioctoat, Bleiacetylacetonat, etc. oder Zinnverbindungen, wie Dibutylzinndiacetat, Dibutylzinndilaurat oder Dibutylzinnoxid; bezüglich weiterer geeigneter Zinnverbindungen und der Zudosierung dieser Zinnkatalysatoren zur Lackzubereitung sei auf die obige Schrift DE-A 37 26 497 verwiesen.

Die Katalysatormenge beträgt im allgemeinen 0,1 bis 6 Gew.-%, vorzugsweise 0,2 bis 3 Gew.-%, berechnet auf Metall und bezogen auf die Summe von (A) und (B)). Sie kann je nach der Reaktivität der Verbindungen (A) und (B), der Art des gegebenenfalls vorhandenen Lösungsmittels, der Wirksamkeit des Katalysators und der beabsichtigten Verfahrensführung variiert werden. Die Metallkatalysatoren können mit den Ausgangsmaterialien direkt vermischt oder getrennt, in einem geeigneten Bindemittel dispergiert, dem Lack zugesetzt werden.

Die erfindungsgemäßen härtbaren Mischungen, insbesondere wäßrige Lackzubereitungen (Elektrotauchlacke), besitzen insbesondere eine sehr gute Lagerstabilität.
Weiterhin zeigen die erfindungsgemäßen Elektrotauchlacke ein ungestörtes Koagulationsverhalten. Dadurch

werden unregelmäßige Abscheidungen, zum einen im Sinne unterschiedlicher Schichtstärken auf dem beschichteten Substrat, zum anderen im Sinne einer Anreicherung einer Komponente im Bad, vermieden. Die sehr gute Stabilität, gekoppelt mit ungestörter Koagulation der Lackzubereitungen zeigt sich auch in den sehr guten L-Blech-Beschichtungen.

Die elektrische Ablagerung der Lackteilchen aus den Elektrotauchlacken erfolgt nach bekannten Verfahren, worauf hier Bezug genommen wird. Die Abscheidung kann auf allen elektrisch leitenden Substraten erfolgen, z.B. Metall wie Stahl, Kupfer, Aluminium und dergleichen.

Nach der Abscheidung wird der Überzug bei erhöhten Temperaturen, die im allgemeinen von der Beschaffenheit der Härterkomponente abhängig sind, durch übliche Verfahren gehärtet, wobei Temperaturen von 100 bis 220 °C vorzugsweise 130 bis 180 °C verwendet werden.

Die erhaltenen Überzüge zeichnen sich insbesondere durch hervorragende mechanische Belastbarkeit (Schlagtiefung, Erichsentiefung) und ausgezeichnete Salzsprühbelastbarkeit (ASTM-B-117-64; 960 Stunden auf zinkphosphatiertem Eisenblech) aus.

In den nachfolgenden Beispielen bedeutet T Gewichtsteile und % Gewichtsprozent. Die Aminzahl beziehen sich stets auf Festharz, sie wurden nach DIN 53176 und DIN 16945/I/5.6) bestimmt.

**Beispiele:**

**I. Herstellung der erfindungsgemäßen Härter (A)**

1) Herstellung der Polyamine (a)

**Allgemeine Vorschrift:**

In einem trockenen Autoklaven wurde das Polyamin bei 70 °C vorgelegt und die Apparatur mit Stickstoff gespült. Bei der Einwaage des Ethylenoxids wurde die in der Leitung zurückgehaltene Menge Ethylenoxid berücksichtigt. Etwa 14-20 % der Ethylenoxidmenge wurden rasch zugegeben, um die Reaktion zu starten, d.h. die hierbei auftretende Exothermie wurde ausgenutzt. Dabei stieg die Temperatur stark an und wurde bei 120-140 °C durch gelegentliches Kühlen abgefangen (ca. 5-10 min.). Die restliche Ethylenoxidmenge wurde dann kontinuierlich bei 110-120 °C (bis zu 5 bar Überdruck) im Verlauf von 1 bis 2 Stunden zugegeben. Anschließend wurden die Leitungen mit Stickstoff gespült. Die Nachreaktion erfolgte 1 h bei 100 °C. Alle ethoxylierten Amine wurden vor dem Umsatz mit dem Isocyanat durch Toluolkreislauf nahezu quantitativ entwässert.

Aus der nachfolgenden Tabelle 1 sind weitere Einzelheiten zu entnehmen:

**Tabelle 1**

| Ausgangskomponenten | | | Reaktionsprodukt | | | |
|---|---|---|---|---|---|---|
| Amin | | Ethylenoxid | Art | Aminzahl | | Ethoxy-lierungs-grad (%) |
| Art | Ein-waage | (Ein-waage) | (Symbol) | gesamt | tertiär | |
| | 215 | 132 | $BisH(EO)_3$ | 473 | 320 | 60 |
| Bis H[1)] | 215 | 176 | $BisH(EO)_4$ | 420 | 295 | 80 |
| | 102 | 132 | $DETA(EO)_3$ | 704 | 427 | 60 |
| DETA[2)] | 102 | 176 | $DETA(EO)_4$ | 598 | 351 | 80 |
| DMAPA[3)] | 102 | 44 | $DMAPA(EO)_1$ | 384 | - | 50 |

1) BisH = Bishexamethylentriamin
2) DETA = Diethylentriamin
3) DMAPA = Dimethylaminopropylamin

**2) Herstellung von teilverkappten Polyisocyanaten (b)**

2.1) Zu 174 T Toluylendiisocyanat (2 Äquiv. NCO; 80 % 2,4-, 20 % 2,6-Isomeres) wurden bei 25-40 °C in Gegenwart von 0.01 % Triethylamin als Katalysator 124 T (1,05 Äquiv. OH) Butylgykol langsam einlaufen gelassen und bis zu einem NCO-Wert von ca. 13,5-14,0 % umgesetzt.

2.2) Beispiel 2.1) wurde wiederholt mit dem Unterschied, daß anstelle von Butylglykol eine Mischung von 109,15 T (0,925 Äquiv. OH) Butylglykol und 11,125 T (0,125 Äquiv. OH) N,N-Dimethylethanolamin eingesetzt wurden (% NCO ~ 13,8-14,3).

**3) Aufbau der Härter:**

3.1) Zu 129,3 T (0,55 Mol) $DETA(EO)_3$ in 116,80 T N-Methylpyrrolidon wurden während 30 min. bei 60 °C 102,3 T (0,55 Mol) ®Beckopox-080 (2-Ethylhexylglycidylether) zugegeben. Die Temperatur stieg bis 80 °C, und die Reaktionsmischung wurde dann bis zum Erreichen einer Epoxidzahl von ~ 0 bei dieser Temperatur gehalten (~ 3 Stunden). Anschließend wurde mit 337 T Dimethyldiglykol verdünnt und auf 60 °C gekühlt. In diese Mischung wurden dann während 30 min. 819,5 T (2,75 Mol) des teilverkappten Polyisocyanats gemäß 2.1) einlaufen gelassen und anschließend während 4 Stunden bei 70 °C bis zu einem %NCO-Wert von < 0,15 umgesetzt.

Die Aminzahl des erhaltenen Härters lag bei ca. 57.5 mg KOH/g.

3.2) Das Beispiel 3.1) wurde wiederholt, mit dem Unterschied, daß anstelle von $DETA(EO)_3$ 191 T (0,55 mol) $BisH(EO)_3$ in 123,8 T N-Methylpyrrolidon eingesetzt wurden. Die anschließende Verdünnung erfolgte mit 354 T Dimethyldiglykol. Die Aminzahl des erhaltenen Produkts betrug ca. 55,7 mg KOH/g.

3.3) 184,1 T (0,66 Mol) $DETA(EO)_4$ wurden in 114 T N-Methylpyrrolidon und 490 T Dimethyldiglykol vorgelegt. Zu dieser Mischung wurden während 30 min. bei 40 °C 65,3 T Hexamethylendiisocyanat und 775 T des teilverkappten Polyisocyanats gemäß 2.2) in 79 T Dimethyldiglykol zugegeben. Anschließend wurde die Reaktionsmischung für 3 h auf 50 °C gehalten bis zu einem % NCO-Wert von ~ 0. Die Aminzahl des Härters lag bei ca. 84,4 mg KOH/g.

3.4) 250 T (0,64 Mol) $BisH(EO)_4$ wurden mit 500 T Toluol vorgelegt und 763 T (2,56 Mol) des teilverkappten Polyisocyanats gemäß 2.1), 54 T Hexamethylendiisocyanat und 211 T Toluol als Mischung bei 50 °C in 0,5 h unter gelegentlichem Kühlen zugetropft. Eine dabei vorübergehende auftretende Inhomogenität störte nicht. Es wurde noch 3,5 h bei 60 °C nachgerührt und ein % NCO-Wert von ~ 0 erreicht. Die Aminzahl des erhaltenen Produkts lag bei ca. 72 mg KOH/g.

3.5) Zu 782 T (2 Mol) Bis $H(EO)_4$ in 500 T Toluol wurden 2384 T (8 Mol) der Verbindung 2.1. in 462 T Toluol bei 40 bis 60 °C gegeben (Dauer der Zugabe ca. 1 Stunde). Sobald der NCO-Wert auf ca. 0,2 % gefallen war, wurden 146 T (1 Mol) DMAPA- $(EO)_1$ zugeführt, die Mischung gut homogenisiert und dann langsam bei 60 bis 80 °C während 1 Stunde 336 T Hexamethylendiisocyanat (2 Mol) einlaufen gelassen. Als der NCO-Wert einen Wert von ca. 0,2 % erreicht hatte, wurde mit 962 T Methoxypropanol-2 verdünnt und 1 Stunde bei ca. 80 °C nachgerührt. Das erhaltene Produkt war niedrigviskos und hatte einen Festkörpergehalt von ca. 65 %. Der Härter enthielt ca. 38,2 % Toluylendiisocyanat, berechnet auf Festharz; seine Aminzahl lag bei ca. 78 mg KOH/g.

## II. Herstellung der Bindemittel (B)

4.1) In Anlehnung an Beispiel VIII/26 der DE-Patentanmeldung P 36 24 454.6 wurde eine Bindemittellösung folgendermaßen hergestellt:
832 T des Monocarbonates von ®Epicote 828 (Diglycidylether von Bisphenol A; 2 Äquiv. Epoxid), 830 T ®Capa 205 ( = Polycaprolactondiol mit mittl. Molmasse von 830) und 712 T Toluol wurden gemischt und bei 70 bis 140 °C in Gegenwart von ca. 0,3 % Bortrifluoridetherat zur Reaktion gebracht bis eine Epoxidzahl von ca. 0 erreicht wurde. Anschließend wurden 1497 T des Biscarbonates von ®Epicote 1001 (2 Äquivalente Carbonat, 70 %ig in Toluol als Suspension) zugesetzt, gut homogenisiert und bei 60 bis 80 °C während 2 Stunden 1192 T der Verbindung gemäß diesem Beispiel 2.1. einlaufen gelassen. Anschließend wurde bis zum Erreichen von ca. 0 %-NCO auf 80 °C gehalten. Die Reaktionsmischung wurde dann auf ca. 40 °C gekühlt, mit 645 T Bishexamethylentriamin versetzt und bei 30 bis 40 °C während 2 bis 3 Stunden nochmals 596 T der Verbindung 2.1. zugegeben und anschließend bei 40 °C bis zu einem % NCO-Wert von < 0,1 % abreagieren gelassen. Die so erhaltene Bindemittelmischung wurde mit 1490 T Methoxypropanol auf 66 % Festkörper eingestellt, auf ca. 70 °C erwärmt und bis zum Erreichen einer Aminzahl von ca. 33 (bez. auf Bindemittel fest) gehalten. Anschließend wurde mit 142 T Ameisensäure (50 %ig) auf einem meQ-Wert von ca. 30 teilneutralisiert (Festkörper ~ 65 %ig, 1 Stunde, 125 °C).

4.2) Analog der EP-Offenlegungsschrift 12463 und der DE-Offenlegungsschrift 36 15810 wurden 301 T Diethanolamin, 189 T N,N-Dimethylaminopropylamin und 1147 T eines Adduktes aus 2 mol 2-Methylpentamethylendiamin und 4 mol Glycidylester der Versaticsäure (Cardura® E 10 von Shell) zu 5273 T Bisphenol A-Epoxidharz (Epoxidäquivalentgewicht 475) in 3000 T Ethoxypropanol gegeben. Das Reaktionsgemisch wurde 4 Stunden unter Rühren bei 60° bis 90 °C und dann eine Stunde bei 120 °C gehalten. Anschließend wurde mit Ethoxypropanol auf 65 % Festkörper verdünnt (~ 720 g).
Hydroxylzahl: 276 mg KOH/ g Festharz.
Hydroxylzahl (primäre OH): 55 mg KOH/g Festharz.
Hydrierjodzahl: praktisch Null
Aminzahl (tertiäre Aminogruppen): 78 mg KOH/g Festharz.

## III. Einsatz des Härters (A) in Lacken

- Unpigmentierte Lacke

### 5a) Herstellung der Lacke:

Beispiele 5.1-5.3: In den nachstehenden Beispielen wurden mit dem Härter gemäß 3.1 bis 3.3 jeweils nach folgender Rezeptur Klarlacke mit ca. 15 % Festkörpergehalt und einem TDI-Gehalt von ca. 18 % (bez. auf Festharz) hergestellt:

Tabelle 2

| Beispiel | Härter gemäß | | | Bindemittel gemäß 4.1 (T) | Dibutylzinndilaurat (T) | 50 %ige Ameisensäure (T) | vollentsalztes Wasser (T) |
|---|---|---|---|---|---|---|---|
| | 3.1 (T) | 3.2 (T) | 3.3 (T) | | | | |
| 5.1 | 84,7 | | | 139,5 | 7,5 | 6,9 | 761,4 |
| 5.2 | | 89,7 | | 134,4 | 7,5 | 6,9 | 761,4 |
| 5.3 | | | 100,2 | 138,6 | 7,5 | 6,9 | 750,0 |

Härter, Bindemittel und Dibutylzinndilaurat wurden eingewogen, gut homogenisiert, anschließend mit Ameisensäure versetzt, neuerlich gut homogenisiert und mit vollentsalztem Wasser (E-Wasser) in einem geeigneten Dispergiergerät (zum Beispiel Dissolver "Pendraulik" der Firma Stephan, Hameln) verdünnt. Derart erstellte Bäder wurden in ein Becherglas gegeben, auf einem Magnetrührtisch für 24 Stunden gealtert und anschließend der Ausprüfung unterzogen.

**5b) Einsatz als Elektrotauchlack**

Die Lackzubereitungen 5.1, 5.2 und 5.3 wurden der kataphoretischen Abscheidung in einem offenen Glasgefäß unterworfen. Als Kathode diente zinkphosphatiertes Stahlblech und als Anode, im Abstand von 5 bis 10 cm von der Kathode, blankes Stahlblech. Die Badtemp. lag bei 28 °C, die Abscheidedauer betrug 2 Minuten.

Die jeweils angelegten Spannungen, die erzielten Filmdicken und die Eigenschaften der abgeschiedenen und anschließend gehärteten Filme (Einbrennbedingungen: 20 min Objekttemperatur von 180 °C) sind in nachstehender Tabelle in zusammengefaßter Form wiedergegeben:

Tabelle 3

| Bad-Daten/Filmeigenschaften | Lack gemäß | | |
|---|---|---|---|
| | 4.1. | 4.2. | 4.3. |
| Abscheidespannung (V) | 300 | 250 | 320 |
| Filmdicke (µm) | 18-20 | 25 | 17-19 |
| Verlauf[1)] | 1 | 2 | 1 |
| Schlagtiefung[2)] | 160 | 140 | 160 |
| Erichsentiefung (mm) | 6,0 | 5,0 | 7,0 |
| Vernetzung[3)] | 2 | 2 | 2 |
| pH-Wert (23 °C) | 5,0 | 5,2 | 5,4 |
| Leitfähigkeit (µS, 23 °C) | 1700 | 1600 | 1430 |
| MCT[4)] (°C) | < 20 | < 20 | < 20 |
| SR[5)] | 37,0 | 83,0 | 7,0 |

[1)] 0 bester Wert, 5 schlechtester Wert,
[2)] 4 Pfund; 1,2, cm Durchmesser; Angaben in inchpound
[3)] Aceton-Test konstante Belastung mit einem Aceton getränkten Wattebausch; Angaben in Minuten-Belastungsdauer.
[4)] MCT = Minimum Coalescing Temperature.
[5)] Die Stabilität der angesetzten Lack wurde als Siebrückstand (SR) durch Filtration über ein ®GAF-Filternetz (Filter der Fa. GAF-Corpor.) mit 30 µm Maschenweite bestimmt. Die Angaben sind in mg/1000 ml Bad, gemessen am 24 Stunden gealterten Bad. Der Rückstand wurde bei 125 °C C/1 h getrocknet.

**pigmentierte Lacke**

**6a) Herstellung der unpigmentierten Lacke**

Für eine Überprüfung der Badstabilität wurden mit den Härtern gemäß Beispiel 3.4. und 3.5. zunächst Lacke in Abmischung mit verschiedenen Bindemitteln hergestellt; bezüglich der Bestandteile und der Mengen siehe nachfolgende Tabelle 4:

Tabelle 4

| Lack I | Lack II |
|---|---|
| 1137 T Bindemittel 4.1 (65 %ig in Toluol/Methoxypropanol)<br>1137 T Bindemittel 4.2 (65 %ig in Ethoxypropanol)<br>870 T Härter 3.4 (60 %ig in Toluol)<br>25,2 T Butyldiglykol<br>22,2 T Ameisensäure (50 %ig)<br>2778 T E-Wasser | 1539 T Bindemittel 4.2 (65 %ig in Ethoxypropanol)<br><br>1370 T Härter 3.5. (65 %ig in Toluol/Methoxypropanol)<br>38 T Butyldiglykol<br>52,2 T Ameisensäure (50 %ig)<br>2627 T E-Wasser |

Die Bindemittel, der Härter, das Butyldiglykol und die Ameinsensäure wurden vorgelegt, gut homogenisiert und dann durch Vakuumdestillation bei Temperaturen von 40-80 °C (Manteltemp.) und Drucken bis minimal 0,02 bar in 50 min. 922 g (Lack I) bzw. 920 g (Lack II) Lösemittel abgezogen. Um ein Schäumen zu vermeiden, wurde dabei der Druck nur entsprechend langsam vermindert. Nach Abschluß der Destillation wurde belüftet und mit 60 °C warmen E-Wasser auf 40 Gew.-% Festkörpergehalt (bestimmt bei 125 °C/1 h) unter gutem Rühren dispergiert. Die so erhaltenen dünnflüssigen Dispersionen wurden bei 40 °C über einen 25 μm GAF-Filter filtriert. Die meQ-Werte lagen bei ca. 25 (Lack I) bzw. ca. 30 (Lack II).

Zur Bestimmung der Stabilität wurden diese Lacke dann einer forcierten Alterung (1 Woche Lagerung bei 40 °C) unterworfen und anschließend erneut der Siebrückstand (SR), der pH-Wert und die Leitfähigkeit gemessen:

Tabelle 5

| | Lack I | | Lack II | |
|---|---|---|---|---|
| | frisch | gealtert | frisch | gealtert |
| SR 5) | < 10 | ~ 30 | ~ 20 | ~ 50 |
| pH-Wert | 6,6 | 6,5 | 6,7 | 6,5 |
| Leitfähigkeit (μS, 23 °C) | 1600 | 1600 | 2100 | 2000 |

**6b) Herstellung der Pigmentpaste**

Nach Beispiel 2 der AT-Patentschrift 380 264 wurde ein Pastenbindemittel hergestellt. Dazu wurden in einem Reaktionsgefäß 320 Teile eines Epoxidharzes auf Basis von Polypropylenglykol (Äquivalentgewicht ca. 320) bei 75 bis 80 °C mit 134 T Talgfettamin und 52 T Diethylaminopropylamin bis zu einem Epoxidwert von 0 umgesetzt. Nach Zugabe von 30 T Paraformaldehyd (91 %ig) wurden mit Spezialbenzin (Kp = 80 bis 120 °C) 19 T Reaktionswasser abgezogen und das Schleppmittel anschließend im Vakuum abdestilliert.

Das so erhaltene Pastenharz wurde dann mit den übrigen Bestandteilen der nachstehenden Rezeptur gemäß der in der DE-Patentanmeldung P 3726497.4 beschriebenen Verfahrensweise zu einer Pigmentpaste verarbeitet:

70,5 T Pastenharz (100 %ig)
7,8 T Ameisensäure (100 %ig; auf meQ 120)
51,0 T basisches Bleisilikatpigment
80,0 T Dibutylzinnoxid

9,2 T Ruß (®Printex 25)
370,0 T Titandioxid (®Kronos RN 59)
13,2 T Butylglykol
220,0 T E-Wasser (auf Verarbeitungsviskosität)
108,0 T E-Wasser (auf Verarbeitungsviskosität)

Der Festkörpergehalt (180 °C/0,5 h) dieser Pigmentpaste betrug ca 63 % und das Pigment-Bindemittel-Verhältnis ca. 12:1.

**6c) Einsatz als Elektrotauchlack**

Die Lacke I/II gemäß 6a wurden mit E-Wasser zunächst auf einen Festkörpergehalt von 25 Gew.-% eingestellt. Dann wurde zu jeweils 1125 T dieser Lacke unter Rühren 286 T der Pigmentpaste 6b) eingetragen und anschließend der Bad-Festkörpergehalt mit E-Wasser auf 18 Gew.-% (125 °C/1 h) reduziert. Das Pigment-Bindemittel-Verhältnis im Bad lag bei etwa 0,4:1.

Die Abscheidung erfolgte wie bei 5b) beschrieben:

**Tabelle 6**

| Bad-Daten/Filmeigenschaften | Pigm. Lack I | Pigm. Lack II |
|---|---|---|
| Aufbruchsspannung (V) | 375 | 375 |
| Abscheidespannung (V) | 350 | 350 |
| Filmdicke (µm) | 18-20 | 20-22 |
| Verlauf 1) | 1 | 2 |
| Schlagtiefung 2) | 120 | 120 |
| Erichsentiefung (mm) | 7,0 | 8,0 |
| Vernetzung 3) | 1 | 1 |
| pH-Wert | 6,5 | 6,6 |
| Leitfähigkeit (µS, 23°C) | 1300 | 1500 |
| MCT 4) (°C) | < 25 | < 25 |
| SR 5) | 30 | 60 |
| L-Blech 6) | 1 | 2 |

---

Bezüglich 1) bis 5) siehe Tabelle 3

6) "L-Blech-Beschichtung": Hierzu wird ein zinkphosphatiertes Blech (zirka 10 x 20 cm) am unteren Ende rechtwinkelig gebogen (ca. 3 cm waagerechte Fläche) und im

Beschichtungsbad so eingehängt, daß der waagrechte Schenkel des L etwa 10 cm unter der Oberfläche des Lackbades ist. Die Beschichtung erfolgt bei abgestellter Rührung und mit einer Beschichtungsdauer von 2 min. Nach Ende der Beschichtung verbleibt das Blech noch 2 min. im Bad. Anschließend wird das Blech aus dem Bad genommen, nach weiteren 2 min. mit Wasser gespült und eingebrannt (s.o.). Das Blech wird visuell hinsichtlich Verlauf, Glanz und Sedimentationserscheinungen beurteilt (0 bester Wert, 5 schlechtester Wert).

Beide Lackansätze zeigten bei 960 Stunden Salzsprühbelastung (ASTM-B 117-64) auf zinkphosphatiertem Blech hervorragende Beständigkeit (Unterwanderungen am Schnitt < 2 mm).

**Vergleichsversuch**

**7.1 Herstellung des Härters**

Es wurde ein geblockter Isocyanatvernetzer (Polyurethanvernetzer) hergestellt, in dem 197 T Butylglykol langsam zu 291 T einer 80:20 - Isomerenmischung von 2,4-/2,6-Toluylendiisocyanat unter Rühren und in einer Stickstoffatmosphäre gegeben wurden, wobei die Reaktionstemperatur durch äußere Kühlung unter 38°C gehalten wurde. Der Ansatz wurde dann noch eine weitere halbe Stunde bei 38°C gehalten und dann auf 60°C erwärmt, wonach 75 T Trimethylolpropan und anschließend 0,08 T Dibutylzinndilaurat als Katalysator zugegeben wurden. Nach einer exothermen Reaktion zu Beginn wurde der Ansatz 1,5 Stunden bei 121°C gehalten bis im wesentlichen die gesamten Isocyanatgruppen verbraucht waren, was durch NCO-Titration und Infrarotspektroskopie bestimmt wurde. Der Ansatz wurde dann mit 303 T Methoxypropanol-2 verdünnt (65 %ig).

**7.2 Herstellung des Lackes (pigmentiert)**

Mit der Pigmentpaste gemäß 6b) wurden entsprechend 6c) mit folgender Rezeptur die Elektrotauchlacke III und IV hergestellt:

Tabelle 7

| Lack III | Lack IV |
|---|---|
| 90 T Bindemittel 4.1 (65 %ig)<br>360 T Bindemittel 4.2 (65 %ig)<br>242 T Härter 7.1<br>20,7 T Ameisensäure (50 %ig)<br>286 T Pigmentpaste 6b)<br>2500 T E-Wasser | -<br>415 T Bindemittel 4.2 (65 %ig)<br>277 T Härter 7.1<br>20,7 T Ameisensäure (50 %ig)<br>286 T Pigmentpaste 6b)<br>2500 T E-Wasser |

**7.3 Einsatz als Elektrotauchlack**

Die Lacke III und IV wurden mit E-Wasser auf einen Bad-Festkörpergehalt von 18 Gew.-% (125°C/1 h) eingestellt. Das Pigment-Bindemittelverhältnis im Bad lag bei etwa 0,4:1, der meQ-Wert bei ca. 50.

Die Abscheidung erfolgte wie bei 5b) beschrieben:

**Tabelle 8**

| Bad-Daten/Filmeigenschaften | Lack III | Lack IV |
|---|---|---|
| Aufbruchsspannung (V) | 300 | 250 |
| Abscheidespannung (V) | 275 | 225 |
| Filmdicke (µm)* | 18-20 | 20-21 |
| Verlauf[1)]* | 2 | 3 |
| Schlagtiefung[2)] | 60 | 60 |
| Erichsentiefung (mm) | 6,6 | 6,5 |
| Vernetzung[3)] | 2 | 2 |
| pH-Wert | 5,8 | 6,0 |

**Tabelle 8**

| Bad-Daten/Filmeigenschaften | Lack III | Lack IV |
|---|---|---|
| Leitfähigkeit (µS, 23°C) | 1000 | 1360 |
| MCT(°C)[4)] | < 25 | < 25 |
| SR[5)] | 500 | 300 |
| L-Blech[6)] | 4 | 4 |

Bezüglich [1)] bis [6)] siehe Tabelle 6.
* korrigiert mit Hexylglykol(1 T)/Bad (100 T).

**Patentansprüche**

**Patentansprüche für folgende Vertragsstaaten : AT, BE, CH, DE, FR, GB, GR, IT, LI, LU, NL, SE**

**1.** Härter (A) für mit Isocyanaten härtbare Harze (B), der eine Aminzahl von 20 bis 150 mg KOH/g und eine OH-Zahl von höchstens 20 mg KOH/g besitzt und mindestens zwei verkappte, unter den Härtungsbedingungen reaktive Isocyanatgruppen pro Molekül aufweist, erhalten durch Umsatz

(a) eines Reaktionsproduktes aus

(1) einem Amin der Formel

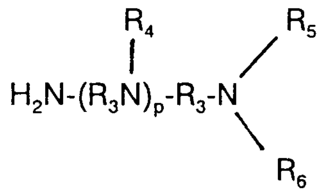

in der

p Null oder eine ganze Zahl von 1 bis 6 ist,

$R_3$ einen zweiwertigen nichtaromatischen Kohlenwasserstoffrest mit 2 bis 18 C-Atomen oder einen Cycloalkylenrest mit 5 bis 12 C-Atomen, oder einen Aralkylenrest mit 7 bis 12 C-Atomen darstellt und

$R_4$ für H oder

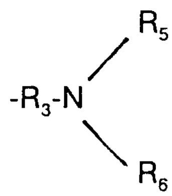

steht, worin $R_3$ die gleiche Bedeutung wie vorstehend hat, und

$R_5$, $R_6$ entweder unabhängig voneinander für H, $(C_1\text{-}C_{20})$Alkyl, Hydroxy$(C_1\text{-}C_{16})$Alkyl oder

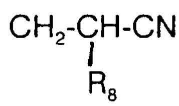

($R_8$ = H oder $(C_1\text{-}C_6)$Alkyl) stehen oder

$R_5$ und $R_6$ Teil eines 5-, 6- oder 7-gliedrigen aliphatischen Ringes sind, mit

(2) einem Monoepoxid, wobei dieses Reaktionsprodukt eine OH-Zahl von 100 bis 1200 mg KOH/g und eine Aminzahl von 100 bis 1200 mg KOH/g aufweist und gegebenenfalls auch NHCO-Gruppen enthält, mit

(b) einem teilverkappten Polyisocyanat, gegebenenfalls in Abmischung mit

(c) einer mindestens difunktionellen, OH- und/oder NH-reaktiven Verbindung.

**2.** Härter nach Anspruch 1, dadurch gekennzeichnet, daß er eine Aminzahl von 20 bis 100 mg KOH/g aufweist.

**3.** Härter nach Anspruch 1 und /oder 2, dadurch gekennzeichnet, daß sein Molekulargewicht ($M_n$) 500 bis 20000 beträgt.

**4.** Härter nach mindestens einem der Ansprüche 1 bis 3, dadurch gekennzeichnet, daß er zwei bis zehn verkappte Isocyanatgruppen pro Molekül aufweist.

**5.** Härter nach mindestens einem der Ansprüche 1 bis 4, dadurch gekennzeichnet, daß das Amin (a) 4 bis 8 $\beta$-Hydroxyalkylgruppen pro Molekül enthält.

**6.** Härter nach mindestens einem der Ansprüche 1 bis 5, dadurch gekennzeichnet, daß das Amin (a) eine OH-Zahl von 200 bis 1000 mg KOH/g und eine Aminzahl von 300 bis 700 mg KOH/g aufweist.

**7.** Härter nach mindestens einem der Ansprüche 1 bis 6, dadurch gekennzeichnet, daß er zusätzlich ein Umsetzungsprodukt aus einer OH- und/oder NH-funktionellen Verbindung mit einem teilverkappten

Polyisocyanat, enthält.

**8.** Härter nach Anspruch 1, dadurch gekennzeichnet, daß das Reaktionsprodukt (a) vor der oder gleichzeitig bei der Reaktion mit dem teilverkappten Polyisocyanat (b) mit einer difunktionellen, OH- und/oder NH-reaktiven Verbindung umgesetzt wird.

**9.** Härter nach mindestens einem der Ansprüche 1 bis 8, dadurch gekennzeichnet, daß die Monoepoxidverbindung die Formel (VI)

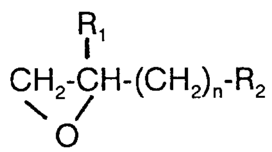

(VI)

besitzt, in der $R_1$, $R_2$ und n die folgende Bedeutung haben:

$R_1$ = H oder ($C_1$-$C_6$)Alkyl (verzweigt oder unverzweigt);

$R_2$ = H,

= Kohlenwasserstoffrest, vorzugsweise (Cyclo)Alkylrest, der verzweigt oder unverzweigt oder unverzweigt sein und Substituenten wie OH-Gruppen tragen kann, mit 1 bis 12, vorzugsweise 1 bis 6 C-Atomen, wie Methyl, Ethyl, Propyl, Hexyl,

= ($C_1$-$C_{10}$)-Alkoxy (verzweigt oder unverzweigt), vorzugsweise ($C_2$-$C_8$)-Alkoxy, wie Ethyloxy, Propyloxy, Butyloxy, 2-Ethylhexyloxy; (vorzugsweise bei n = 1),

= ($C_1$-$C_{15}$)-Acyloxy (verzweigt oder unverzweigt), vorzugsweise ($C_4$-$C_{12}$)-Acyloxy; (vorzugsweise bei n = 1);

n = 0 oder 1.

**10.** Härter nach mindestens einem der Ansprüche 1 bis 9, dadurch gekennzeichnet, daß es sich bei der difunktionellen, OH- und/oder NH-reaktiven Verbindung um ein Diisocyanat oder ein Diepoxid handelt.

**11.** Härtbare Mischungen enthaltend einen Härter (A), ein mit Isocyanatem härtbares Bindemittel (B), gegebenenfalls ein Verdünnungsmittel (C), sowie gegebenenfalls Zusatzstoffe (D), dadurch gekennzeichnet, daß der Härter (A) derjenige gemäß einem oder mehreren der Ansprüche 1 bis 10 ist.

**12.** Härtbare Mischung nach Anspruch 11, dadurch gekennzeichnet, daß das Bindemittel (B) ein mittleres Molekulargewicht ($M_n$) von etwa 1000 bis 20000 aufweist und Hydroxyl-Gruppen und/oder Aminogruppen enthält.

**13.** Verwendung der Härter mach mindestens einem der Ansprüche 1 bis 10 zur Härtung von mit Isocyanaten härtbaren Harzen in härtbaren Mischungen.

**14.** Verwendung nach Anspruch 13, dadurch gekennzeichnet, daß die Härter in wäßrigen Lackzubereitungen, vorzugsweise Elektrotauchlacken, eingesetzt werden.

**15.** Verwendung nach Anspruch 13 und/oder 14, dadurch gekennzeichnet, daß die basischen Aminogruppen im Härter teilweise oder vollständig neutralisiert sind.

**Patentansprüche für folgenden Vertragsstaat : ES**

**1.** Verfahren zur Herstellung eines Härters (A) für mit Isocyanaten härtbare Harze (B), der eine Aminzahl von 20 bis 150 mg KOH/g und eine OH-Zahl von höchstens 20 mg KOH/g besitzt und mindestens zwei verkappte, unter den Härtungsbedingungen reaktive Isocyanatgruppen pro Molekül aufweist, dadurch gekennzeichnet, daß man

(a) ein Reaktionsprodukt aus

(1) einem Amin der Formel

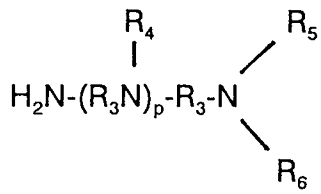

in der

p Null oder eine ganze Zahl von 1 bis 6 ist,

$R_3$ einen zweiwertigen nichtaromatischen Kohlenwasserstoffrest mit 2 bis 18 C-Atomen oder einen Cycloalkylenrest mit 5 bis 12 C-Atomen, oder einen Aralkylenrest mit 7 bis 12 C-Atomen darstellt und

$R_4$ für H oder

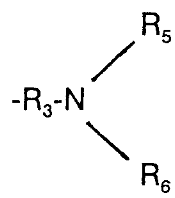

steht, worin $R_3$ die gleiche Bedeutung wie vorstehend hat, und

$R_5$, $R_6$ entweder unabhängig voneinander für H, $(C_1-C_{20})$Alkyl, Hydroxy$(C_1-C_{16})$Alkyl oder

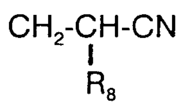

($R_8$ = H oder $(C_1-C_6)$Alkyl) stehen oder

$R_5$ und $R_6$ Teil eines 5-, 6- oder 7-gliedrigen aliphatischen Ringes sind, mit

(2) einem Monoepoxid, wobei dieses Reaktionsprodukt eine OH-Zahl von 100 bis 1200 mg KOH/g und eine Aminzahl von 100 bis 1200 mg KOH/g aufweist und gegebenenfalls auch NHCO-Gruppen enthält, mit

(b) einem teilverkappten Polyisocyanat umsetzt, gegebenfalls in Abmischung mit

(c) einer mindestens difunktionellen, OH- und/oder NH-reaktiven Verbindung.

**2.** Verfahren nach Anspruch 1, dadurch gekennzeichnet, daß der hergestellte Härter (A) eine Aminzahl von 20 bis 100 mg KOH/g aufweist.

**3.** Verfahren nach Anspruch 1 und/oder 2, dadurch gekennzeichnet, daß das Molekulargewicht ($M_n$) des Härters 500 bis 20000 beträgt.

**4.** Verfahren nach mindestens einem der Ansprüche 1 bis 3, dadurch gekennzeichnet, daß der erhaltene Härter (A) zwei bis zehn verkappte Isocyanatgruppen pro Molekül aufweist.

**5.** Verfahren nach mindestens einem der Ansprüche 1 bis 4, dadurch gekennzeichnet, daß das eingesetzte Amin (a) 4 bis 8 $\beta$-Hydroxyalkylgruppen pro Molekül enthält.

**6.** Verfahren nach mindestens einem der Ansprüche 1 bis 5, dadurch gekennzeichnet, daß das eingesetzte Amin (a) eine OH-Zahl von 200 bis 1000 mg KOH/g und eine Aminzahl von 300 bis 700 mg KOH/g aufweist.

**7.** Verfahren nach Anspruch 1, dadurch gekennzeichnet, daß das Reaktionsprodukt (a) vor der oder gleichzeitig bei der Reaktion mit dem teilverkappten Polyisocyanat (b) mit einer difunktionellen, OH- und/oder NH-reaktiven Verbindung umgesetzt wird.

**8.** Verfahren nach mindestens einem der Ansprüche 1 bis 7, dadurch gekennzeichnet, daß die Monoepoxidverbindung die Formel (VI)

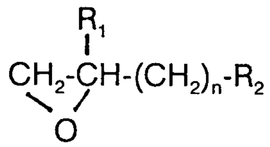

(VI)

besitzt, in der $R_1$, $R_2$ und n die folgende Bedeutung haben:

$R_1$ = H oder $(C_1$-$C_6)$Alkyl (verzweigt oder unverzweigt);

$R_2$ = H,
= Kohlenwasserstoffrest, vorzugsweise (Cyclo)Alkylrest, der verzweigt oder unverzweigt oder unverzweigt sein und Substituenten wie OH-Gruppen tragen kann, mit 1 bis 12, vorzugsweise 1 bis 6 C-Atomen, wie Methyl, Ethyl, Propyl, Hexyl,
= $(C_1$-$C_{10})$-Alkoxy (verzweigt oder unverzweigt), vorzugsweise $(C_2$-$C_8)$-Alkoxy, wie Ethyloxy, Propyloxy, Butyloxy, 2-Ethylhexyloxy; (vorzugsweise bei n = 1),
= $(C_1$-$C_{15})$-Acyloxy (verzweigt oder unverzweigt), vorzugsweise $(C_4$-$C_{12})$-Acyloxy; (vorzugsweise bei n = 1);

n = 0 oder 1.

**9.** Verfahren nach mindestens einem der Ansprüche 1 bis 8, dadurch gekennzeichnet, daß es sich bei der difunktionellen, OH- und/oder NH-reaktiven Verbindung um ein Diisocyanat oder ein Diepoxid handelt.

**10.** Verfahren zur Herstellung von härtbaren Mischungen enthaltend einen Härter (A), ein mit Isocyanaten härtbares Bindemittel (B), gegebenenfalls ein Verdünnungsmittel (C), sowie gegebenenfalls Zusatzstoffe (D), dadurch gekennzeichnet, daß der Härter (A) gemäß einem oder mehreren der Ansprüche 1 bis 9 hergestellt ist.

**11.** Verfahren zur Herstellung von härtbaren Mischungen nach Anspruch 10, dadurch gekennzeichnet, daß das Bindemittel (B) ein mittleres Molekulargewicht $(M_n)$ von etwa 1000 bis 20000 aufweist und Hydroxyl-Gruppen und/oder Aminogruppen enthält.

**12.** Verwendung der Härter mach mindestens einem der Ansprüche 1 bis 9 zur Härtung von mit Isocyanaten härtbaren Harzen in härtbaren Mischungen.

**13.** Verwendung nach Anspruch 12, dadurch gekennzeichnet, daß die Härter in wäßrigen Lackzubereitungen, vorzugsweise Elektrotauchlacken, eingesetzt werden.

**14.** Verwendung nach Anspruch 12 und/oder 13, dadurch gekennzeichnet, daß die basischen Aminogruppen im Härter teilweise oder vollständig neutralisiert sind.

**Claims**
**Claims for the following Contracting States : AT, BE, CH, DE, FR, GB, GR, IT, LI, LU, NL, SE**

**1.** A curing agent (A) for resins (B) curable by means of isocyanates which has an amine number of 20 to 150 mg of KOH/g and an OH number of not more than 20 mg of KOH/g and contains, per molecule, at least two masked isocyanate groups which are reactive under the conditions of curing, and which is obtained by reacting

(a) a reaction product obtained from

(1) an amine of the general formula

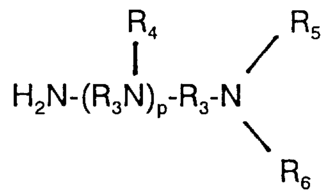

in which
p denotes zero or an integer from 1 to 6,
$R_3$ denotes a divalent, nonaromatic hydrocarbon radical having 2 to 18 carbon atoms, or a cycloalkylene radical having 5 to 12 carbon atoms, or a aralkylene radical having 7 to 12 carbon atoms, and
$R_4$ denotes H or

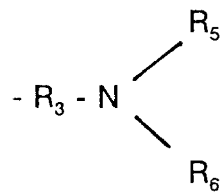

($R_3$ having the same meaning as above)
and
$R_5$ and $R_6$ either independently of one another represent
H, ($C_1$-$C_{20}$)-alkyl, hydroxy($C_1$-$C_{16}$)-alkyl or

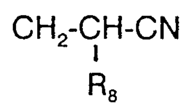

($R_8$ = H or ($C_1$-$C_6$)-alkyl) or
$R_5$ and $R_6$ are part of a 5-membered, 6- membered or 7-membered aliphatic ring,
and
(2) a monoepoxide
said reaction product having an OH number of 100 to 1,200 mg of KOH/g and an amine number of 100 to 1,200 mg of KOH/g and optionally also containing NHCO groups, with
(b) a partly masked polyisocyanate, optionally in admixture with
(c) an at least difunctional, OH-reactive or NH-reactive compound.

**2.** The curing agent as claimed in claim 1, characterized in that it has an amine number of 20 to 100 mg of KOH/g.

**3.** The curing agent as claimed in claim 1 and/or 2, characterized in that it has a molecular weight ($M_n$) of 500 to 20,000.

**4.** The curing agent as claimed in at least one of claims 1 to 3, characterized in that it has 2 to 10 masked isocyanate groups per molecule.

**5.** The curing agent as claimed in at least one of claims 1 to 4, characterized in that the amine (a) contains 4 to 8 $\beta$-hydroxyalkyl groups per molecule.

**6.** The curing agent as claimed in at least one of claims 1 to 5, characterized in that the amine (a) has an OH number of 200 to 1,000 mg of KOH/g and an amine number of 300 to 700 mg KOH/g.

**7.** The curing agent as claimed in at least one of claims 1 to 6, characterized in that it additionally contains a reaction product obtained from an OH-functional and/or NH-functional compound and a partially masked polyisocyanate.

**8.** The curing agent as claimed in claim 1, characterized in that the reaction product (a) is reacted with a difunctional, OH-reactive and/or NH-reactive compound prior to or at the same time as the reaction with the partly masked polyisocyanate (b).

**9.** The curing agent as claimed in at least one of claims 1 to 8, characterized in that the monoepoxide compound corresponds to the general formula VI,

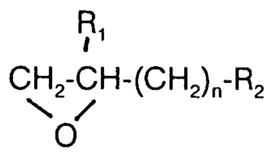 (VI)

in which $R_1$, $R_2$ and n have the following meaning:

$R_1$ = H or a linear or branched alkyl radical with 1 to 6 carbon atoms,

$R_2$ = H or
a hydrocarbon radical, preferably cycloalkyl radical, which may be branched or non-branched, and may carry substituents like hydroxy groups, with 1 or 12, preferably 1 to 6 carbon atoms, like the methyl, ethyl, propyl, and n-hexyl radicals
a linear or branched alkoxy radical with 1 to 10 carbon atoms; preferably (if n = 1) 2 to 8 carbon atoms like the ethoxy, propoxy, butoxy, and 2-ethyl-hexyloxy radicals,
a linear or branched acyloxy radical with 1 to 15 carbon atoms; preferably (if n = 1) 4 to 12 carbon atoms,

n = 0 or 1.

**10.** The curing agent as claimed in at least one of claims 1 to 9, characterized in that the difunctional, OH-reactive and/or NH-reactive compound is a diisocyanate or a diepoxide.

**11.** Curable mixtures containing a curing agent (A), a binder (B), which can be cured by means of isocyanates, if appropriate a thinner (C) and also, if appropriate, additives (D), characterized in that the curing agent (A) is the curing agent as claimed in one or more of claims 1 to 10.

**12.** Curable mixtures as claimed in claim 11, characterized in that the binder (B) has an average molecular weight ($M_n$) of about 1,000 to about 20,000 and contains hydroxyl groups and/or amino groups.

**13.** Use of the curing agents as claimed in at least one of claims 1 to 10 for curing resins which can be cured by means of isocyanates in curable mixtures.

**14.** The use as claimed in claim 13, characterized in that the curing agents are employed in aqueous paint formulations, preferably electrodeposition paints.

**15.** The use as claimed in claims 13 and/or 14, characterized in that the basic amino groups in the curing agent have been partly or completely neutralized.

**Claims for the following Contracting State : ES**

**1.** Process for preparing a curing agent (A) for resins (B) curable by means of isocyanates which curing agent has an amine number of 20 to 150 mg of KOH/g and an OH number of not more than 20 mg of KOH/g and contains, per molecule, at least two masked isocyanate groups which are reactive under the conditions of curing which includes reacting
(a) a reaction product obtained from

(1) an amine of the general formula

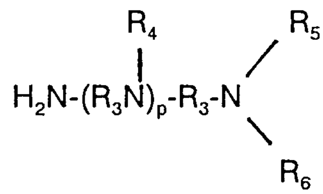

in which
p denotes zero or an integer from 1 to 6,
$R_3$ denotes a divalent, nonaromatic hydrocarbon radical having 2 to 18 carbon atoms, or a cycloalkylene radical having 5 to 12 carbon atoms, or a aralkylene radical having 7 to 12 carbon atoms, and
$R_4$ denotes H or

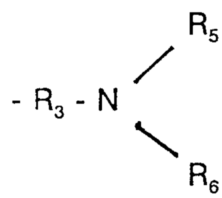

($R_3$ having the same meaning as above)
and
$R_5$ and $R_6$ either independently of one another represent
H, $(C_1-C_{20})$-alkyl, hydroxy$(C_1-C_{16})$-alkyl or

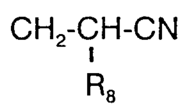

($R_8$ = H or $(C_1-C_6)$-alkyl) or
$R_5$ and $R_6$ are part of a 5-membered, 6- membered or 7-membered aliphatic ring,
and
(2) a monoepoxide
said reaction product having an OH number of 100 to 1,200 mg of KOH/g and an amine number of 100 to 1,200 mg of KOH/g and optionally also containing NHCO groups, with
(b) a partly masked polyisocyanate, optionally in admixture with
(c) an at least difunctional, OH-reactive or NH-reactive compound.

**2.** The process as claimed in claim 1, characterized in that the curing agent (A) has an amine number of 20 to 100 mg of KOH/g.

**3.** The process as claimed in claim 1 and/or 2, characterized in that the curing agent obtained has a molecular weight ($M_n$) of 500 to 20,000.

**4.** The process as claimed in at least one of claims 1 to 3, characterized in that the curing agent obtained has 2 to 10 masked isocyanate groups per molecule.

**5.** The process as claimed in at least one of claims 1 to 4, characterized in that the employed amine (a) contains 4 to 8 $\beta$-hydroxyalkyl groups per molecule.

**6.** The process as claimed in at least one of claims 1 to 5, characterized in that the employed amine (a) has an OH number of 200 to 1,000 mg of KOH/g and an amine number of 300 to 700 mg KOH/g.

7. The process as claimed in claim 1, characterized in that the reaction product (a) is reacted with a difunctional, OH-reactive and/or NH-reactive compound prior to or at the same time as the reaction with the partly masked polyisocyanate (b).

8. The process as claimed in at least one of claims 1 to 7, characterized in that the monoepoxide compound corresponds to the general formula VI,

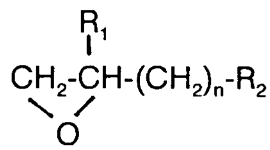

(VI)

in which $R_1$, $R_2$ and n have the meanings

$R_1$ = H or a linear or branched alkyl radical with 1 to 6 carbon atoms,

$R_2$ = H or
a hydrocarbon radical, preferably cycloalkyl radical, which may be branched or non-branched, and may carry substituents like hydroxy groups, with 1 or 12, preferably 1 to 6 carbon atoms, like the methyl, ethyl, propyl, and n-hexyl radicals
a linear or branched alkoxy radical with 1 to 10 carbon atoms; preferably (if n = 1) 2 to 8 carbon atoms like the ethoxy, propoxy, butoxy, and 2-ethyl-hexyloxy radicals,
a linear or branched acyloxy radical with 1 to 15 carbon atoms; preferably (if n = 1) 4 to 12 carbon atoms,

n = 0 or 1

9. The process as claimed in at least one of claims 1 to 8, characterized in that the difunctional, OH-reactive and/or NH-reactive compound is a diisocyanate or a diepoxide.

10. A process for the preparation of curable mixtures containing a curing agent (A), a binder (B), which can be cured by means of isocyanates, if appropriate a thinner (C) and also, if appropriate, additives (D), characterized in that the curing agent (A) is prepared as claimed in one or more of claims 1 to 9.

11. The process as claimed in claim 10, characterized in that the binder (B) has an average molecular weight ($M_n$) of about 1,000 to about 20,000 and contains hydroxyl groups and/or amino groups.

12. Use of the curing agents as claimed in at least one of claims 1 to 9 for curing resins which can be cured by means of isocyanates in curable mixtures.

13. The use as claimed in claim 12, characterized in that the curing agents are employed in aqueous paint formulations, preferably electrodeposition paints.

14. The use as claimed in claims 12 and/or 13, characterized in that the basic amino groups in the curing agent have been partly or completely neutralized.

**Revendications**
**Revendications pour les Etats contractants suivants : AT, BE, CH, DE, FR, GB, GR, IT, LI, LU, NL, SE**

1. Durcisseur (A) pour des résines durcissables (B) avec des isocyanates, qui comporte un indice d'amine de 20 à 150 mg de KOH/g et un indice de OH d'au plus 20 mg de KOH/g et qui présente par molécule au moins deux groupes isocyanates couronnés et réactifs dans les conditions de durcissement, ce durcisseur étant obtenu par réaction

(a) d'un produit de réaction à partir de

(1) une amine de formule

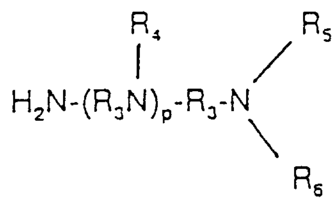

dans laquelle

p est zéro ou un nombre entier de 1 à 6,

$R_3$ est un radical hydrocarboné non aromatique bivalent ayant de 2 à 18 atomes de C ou un radical cycloalkylène ayant de 5 à 12 atomes de C, ou un radical aralkylène ayant de 7 à 12 atomes de C, et

$R_4$ représente H ou

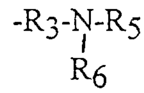

où $R_3$ a la même signification que précédemment, et

$R_5$, $R_6$, soit, indépendamment l'un de l'autre représentent H, un alkyle en $C_1$-$C_{20}$, un hydroxyalkyle en $C_1$-$C_{16}$, ou

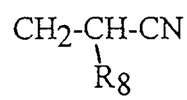

($R_8$ = H ou un alkyle en $C_1$-$C_6$), ou

$R_5$ et $R_6$ sont une partie d'un cycle aliphatique à 5, 6 ou 7 chaînons, avec

(2) un monoépoxyde, de telle sorte que ce produit de réaction ait un indice de OH de 100 à 1200 mg de KOH/g et un indice d'amine de 100 à 1200 mg de KOH/g, et présente aussi éventuellement des groupes NHCO, avec

(b) un polyisocyanate partiellement couronné, éventuellement en mélange avec

(c) un composé au moins difonctionnel réactif avec OH et/ou NH.

**2.** Durcisseur selon la revendication 1, caractérisé en ce qu'il présente un indice d'amine de 20 à 100 mg de KOH/g.

**3.** Durcisseur selon la revendication 1 et/ou 2, caractérisé en ce que son poids moléculaire ($M_n$) est de 500 à 20 000.

**4.** Durcisseur selon au moins une des revendications 1 à 3, caractérisé en ce qu'il présente de deux à dix groupes isocyanates couronnés par molécule.

**5.** Durcisseur selon au moins une des revendications 1 à 4, caractérisé en ce que l'amine (a) comporte de 4 à 8 groupes $\beta$-hydroxyalkyles par molécule.

**6.** Durcisseur selon au moins une des revendications 1 à 5, caractérisé en ce que l'amine (a) a un indice de OH de 200 à 1000 mg de KOH/g et un indice d'amine de 300 à 700 mg de KOH/g.

**7.** Durcisseur selon au moins une des revendications 1 à 6, caractérisé en ce qu'il comporte en outre un produit de réaction à partir d'un composé à fonctions OH et/ou NH avec un polyisocyanate partiellement couronné.

**8.** Durcisseur selon la revendication 1, caractérisé en ce qu'on fait réagir le produit de réaction (a), avant ou pendant la réaction avec le polyisocyanate (b) partiellement couronné, avec un composé difonctionnel, réactif avec OH et/ou NH.

**9.** Durcisseur selon au moins une des revendications 1 à 8, caractérisé en ce que le composé monoépoxyde a la formule (VI)

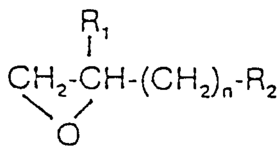

(VI)

dans laquelle $R_1$, $R_2$ et n ont les significations suivantes:

$R_1$ = H ou un alkyle en $C_1$-$C_6$ (ramifié ou non ramifié);

$R_2$ = H,

= un radical hydrocarboné, de préférence un radical (cyclo)alkyle qui peut être ramifié ou non ramifié et qui peut porter des substituants comme les groupes OH, avec de 1 à 12, de préférence de 1 à 6 atomes de C, comme le méthyle, l'éthyle, le propyle, l'hexyle,

= un alcoxy en $C_1$-$C_{10}$ (ramifié ou non ramifié), de préférence un alcoxy en $C_2$-$C_8$, comme l'éthyloxy, le propyloxy, le butyloxy, le 2-éthylhexyloxy ;(de préférence pour n = 1),

= un acyloxy en $C_1$-$C_{15}$ (ramifié ou non ramifié), de préférence un acyloxy en $C_4$-$C_{12}$ ; (de préférence pour n = 1);

n = 0 ou 1.

**10.** Durcisseur selon au moins une des revendications 1 à 9, caractérisé en ce qu'il s'agit, pour le composé difonctionnel réagissant avec OH et/ou NH, d'un diisocyanate ou d'un diépoxyde.

**11.** Mélange durcissable comportant un durcisseur (A), un liant (B) durcissable avec des isocyanates, éventuellement un agent (C) de dilution, ainsi éventuellement que des additifs (D), caractérisé en ce que le durcisseur (A) est celui conforme à une ou plusieurs des revendications 1 à 10.

**12.** Mélange durcissable selon la revendication 11, caractérisé en ce que le liant (B) a un poids moléculaire moyen ($M_n$) d'environ 1000 à 20 000 et comporte des groupes hydroxyle et/ou amino.

**13.** Utilisation des durcisseurs selon au moins une des revendications 1 à 10, pour durcir des résines, durcissables avec des isocyanates, dans des mélanges durcissables.

**14.** Utilisation selon la revendication 13, caractérisée en ce que les durcisseurs sont utilisés dans des préparations aqueuses de laques, de préférences des laques pour trempage électrophorétique.

**15.** Utilisation selon la revendication 13 et/ou 14, caractérisée en ce que les groupes amino basiques dans le durcisseur sont partiellement ou totalement neutralisés.

**Revendications pour l'Etat contractant suivant : ES**

**1.** Procédé pour préparer un durcisseur (A) pour des résines durcissables (B) avec des isocyanates, qui comporte un indice d'amine de 20 à 150 mg de KOH/g et un indice de OH d'au plus 20 mg de KOH/g et qui présente par molécule au moins deux groupes isocyanates couronnés et réactifs dans les conditions de durcissement, caractérisé en ce qu'on fait réagir

(a) un produit de réaction à partir de

(1) une amine de formule

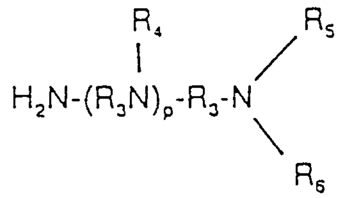

dans laquelle

p est zero ou un nombre entier de 1 à 6,

$R_3$ est un radical hydrocarboné non aromatique bivalent ayant de 2 à 18 atomes de C ou un radical cycloalkylène ayant de 5 à 12 atomes de C, ou un radical aralkylène ayant de 7 à 12 atomes de C, et

$R_4$ représente H ou

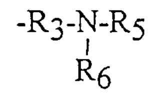

où $R_3$ a la même signification que précédemment, et

$R_5$, $R_6$, soit, indépendamment l'un de l'autre représentent H, un alkyle en $C_1$-$C_{20}$, un hydroxyalkyle en $C_1$-$C_{16}$, ou

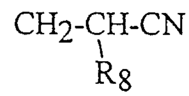

($R_8$ = H ou un alkyle en $C_1$-$C_6$), ou

$R_5$ et $R_6$ sont une partie d'un cycle aliphatique à 5, 6 ou 7 chaînons, avec

(2) un monoépoxyde, de telle sorte que ce produit de réaction ait un indice de OH de 100 à 1200 mg de KOH/g et un indice d'amine de 100 à 1200 mg de KOH/g, et présente aussi éventuellement des groupes NHCO, avec

(b) un polyisocyanate partiellemènt couronné, éventuellement en mélange avec

(c) un composé au moins difonctionnel réactif avec OH et/ou NH.

**2.** Procédé selon la revendication 1, caractérisé en ce que le durcisseur (A) obtenu présente un indice d'amine de 20 à 100 mg de KOH/g.

**3.** Procédé selon la revendication 1 et/ou 2, caractérisé en ce que le poids moléculaire ($M_n$) du durcisseur est de 500 à 20 000.

**4.** Procédé selon au moins une des revendications 1 à 3, caractérisé en ce que le durcisseur (A) obtenu présente de deux à dix groupes isocyanates couronnés par molécule.

**5.** Procédé selon au moins une des revendications 1 à 4, caractérisé en ce que l'amine (a) utilisée comporte de 4 à 8 groupes $\beta$-hydroxyalkyles par molécule.

**6.** Procédé selon au moins une des revendications 1 à 5, caractérisé en ce que l'amine (a) utilisée a un indice de OH de 200 à 1000 mg de KOH/g et un indice d'amine de 300 à 700 mg de KOH/g.

**7.** Procédé selon la revendication 1, caractérisé en ce qu'on fait réagir le produit de réaction (a), avant ou pendant la réaction avec le polyisocyanate (b) partiellement couronné, avec un composé difonctionnel réagissant avec OH et/ou NH.

**8.** Procédé selon au moins une des revendications 1 à 7, caractérisé en ce que le composé monoépoxyde a la formule (VI)

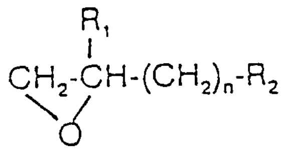

(VI)

dans laquelle $R_1$, $R_2$ et n ont les significations suivantes :

$R_1$ = H ou un alkyle en $C_1$-$C_6$ (ramifié ou non ramifié);

$R_2$ = H,

= un radical hydrocarboné, de préférence un radical (cyclo)alkyle qui peut être ramifié ou non ramifié et qui peut porter des substituants comme les groupes OH, avec de 1 à 12, de préférence de 1 à 6 atomes de C, comme le méthyle, l'éthyle, le propyle, l'hexyle,

= un alcoxy en $C_1$-$C_{10}$ (ramifié ou non ramifié), de préférence un alcoxy en $C_2$-$C_8$, comme l'éthyloxy, le propyloxy, le butyloxy, le 2-éthylhexyloxy; (de préférence pour n = 1),

= un acyloxy en $C_1$-$C_{15}$ (ramifié ou non ramifié), de préférence un acyloxy en $C_4$-$C_{12}$ ; (de préférence pour n = 1);

n = 0 ou 1.

**9.** Procédé selon au moins une des revendications 1 à 8, caractérisé en ce qu'il s'agit, pour le composé difonctionnel réagissant avec OH et/ou NH, d'un diisocyanate ou d'un diépoxyde.

**10.** Procédé dur préparer un mélange durcissable comportant un durcisseur (A), un liant (B) durcissable avec des isocyanates, éventuellement un agent (C) de dilution, ainsi éventuellement que des additifs (D), caractérisé en ce que le durcisseur (A) est produit conformément à une ou plusieurs des revendications 1 à 9.

**11.** Procédé selon la revendication 10, caractérisé en ce que le liant (B) a un poids moléculaire moyen ($M_n$) d'environ 1000 à 20 000 et comporte des groupes hydroxyle et ou amino.

**12.** Utilisation des durcisseurs selon au moins une des revendications 1 à 9, pour durcir des résines, durcissables avec des isocyanates, dans des mélanges durcissables.

**13.** Utilisation selon la revendication 12, caractérisée en ce que les durcisseurs sont utilisés dans des préparations aqueuses de laques, de préférences des laques pour trempage électrophorétique.

**14.** Utilisation selon la revendication 12 et/ou 13, caractérisée en ce que les groupes amino basiques dans le durcisseur sont partiellement ou totalement neutralisés.